# EUROPEAN PATENT SPECIFICATION

(11) **EP 0 519 858 B1**
(45) Date of publication and mention of the grant of the patent: **28.12.1994**
(21) Application number: 92610045.4
(22) Date of filing: 16.06.1992
(51) Int. Cl.: A01F 29/00, F23G 5/033

(54) **Method of loosening bales of straw**
Verfahren zum Auflösen von Strohballen
Méthode pour désagréger des balles de paille

(30) Priority: 18.06.1991 DK 1180/91
(43) Date of publication of application: 23.12.1992
(73) Proprietor: BURMEISTER & WAIN ENERGI A/S, DK-2830 VIRUM (DK)
(72) Inventor: Petersen, Jens Harmundal, DK-2700 Bronshoj (DK)
(74) Representative: Jessen, Ivar Bergishagen

(56) References cited:
- WO-A-86/04404
- DE-A- 3 117 047
- DE-A- 3 302 380

## Description

The present invention relates to a method of raking up bales of straw, in particular but not exclusively in a plant for raking up and firing bales of straw, by which method the bales of straw are conveyed on a raking table driven by a motor against a raking tool comprising several parallel, saw-toothed raking rods, which by a raking up motor are driven in a reciprocating movement, and a grate engaging the raking rods, said grate being movably suspended and moved by an actuator, thereby determining the penetration depth of the teeth of the raking tools into the bale of straw, the motor of the raking table being of the kind which produces a torque which is essentially constant over the range of revolutions from standstill to about 2/3 of the nominal number of revolutions, the power supplied to the motor of the raking table increases from a lower level to a higher level, when it is detected that the speed of the raking table goes below a predetermined value, and where the power again decreases to the lower level, when it is detected that the speed of the raking table is again exceeding said value.

According to this method the power supplied to the drive motor of the raking table is increased from a lower level to a higher level, when it is detected that the speed of the raking table is below a predetermined value, in order that it should be easier for the raking tool to take hold of the straw of the bale, when it is pressed against the raking tool with a bigger force. As a consequence of the greater force the power consumption of the motor of the raking tool increases, and in the known plant the control thereof is adapted in such a way that the raking motor reverses, if the power consumed reaches a predetermined maximum value. Thereby the teeth of the raking tool will lift the bale of straw and shake the straw close to the raking tool. After a short period of running in this way, the raking motor is reversed to the normal travelling direction, and if it is detected that the raking tool rakes the straw out again, which is ascertained thereby that the raking table again moves with a speed above the predetermined value, the power supplied to the drive motor of the raking table is again reduced to the lowest level. If said reversion of the raking motor does not lead to the desired result, it is repeated, and if the straw has not been raked out after a certain definite number of reversions, the whole plant is stopped, and manual action will be called for.

From the accepted Danish specification no. 156. 747 B a method the same type as the one described by way of introduction is known, according to which method problems in connection with portions of particularly stringy straw in the bale are overcome by the grating being movable, and it is stated that the movement of the grate is controlled in accordance with the load on the raking motor in such a way, that the penetration depth of the raking tool into the bale of straw decreases, when the load increases, i.e. when a stringy portion is present in the bale.

It has, however, turned out that in plants using the method stated by way of introduction, operation is often brought to a halt due to the fact that the raking tool cannot grasp the straw in the bale. In many cases it has been found that this is due to the raking rods having formed grooves in the bale of straw and just goes up and down in these grooves without any raking up of the straw taking place. The object of the invention is to provide a method of the above kind, by means of which method this drawback is eliminated.

The method according to the invention differs from prior art in that the grate, when it is detected that the drive motor of the raking table is supplied with power at the higher level and the raking motor simultaneously consumes a small amount of power, is moved from its starting position with a predetermined penetration depth to another position with a bigger penetration depth and returned to the starting position after the expiration of a predetermined period of time.

Through detection of simultaneous occurrence of a big power supply to the drive motor of the raking table and small power consumption in the raking motor an indication is attained that the raking rods have formed grooves in the bale of straw and now operate to no avail in these. Through subsequently moving the grate away from the bale of straw for a period of time it has surprisingly turned out that the raking rods are once again able to grasp the straw and continue the raking up.

It is assumed that a reason for the raking rods forming the grooves in question is that the straws in a portion of the straw are particularly brittle and therefore break when caught by the teeth of the raking tool. By removing the grate from the bale of straw it is achieved partly that the bale of straw is relieved from the pressure against the grate thereby expanding and loosening somewhat, partly that the raking tool gets a bigger penetration depth, making it possible for the raking teeth to grasp straw which has not been torn and which are perhaps more stringy.

In a preferred embodiment of the method according to the invention the predetermined period of time is selected within the range 1-60 s, preferably 15 s. It has turned out to be sufficient to move the grate away from the bale of straw for a comparatively small amount of time. Operating the raking tool for a longer period of time in this condition will only cause an overload of the raking motor on account of the bigger penetration depth and the consequently bigger raking up capacity.

In another embodiment the power supply to the drive motor of the raking table is disconnected, when the grate takes up its other position, and power is again supplied to the drive motor of the raking table at the expiration of another predetermined period of time after the return of the grate to the starting position. It is thereby achieved that the compressing power acting on the bale of straw is completely removed, which facilitates the raking up of the straws from the bale without tearing of the straws, both in the cases, where the straws in themselves are brittle, but also If there are portions in the bale which are particularly firmly compressed, but where the straws in themselves are not particularly brittle.

In a third embodiment it is preferred that the second period of time is selected within the range 0-30 s, preferably 2 s. Due to the keeping up of a certain firing capacity it is necessary to limit the time, in which the raking table stands still. This is in particular important, if the associated furnace heats a steam boiler in which the steam formation is directly dependent on the immediately fired amount of straw.

In a fourth embodiment an electric motor is selected as a drive motor for the raking table.

The invention will be explained in detail in the following by means of an embodiment and with reference to the accompanying drawing, in which
Fig. 1 is a lateral view of a raking tool with a movable grate and a part of a raking table with a bale of straw, and
Fig. 2 is a sectional view along the line II-II in Fig. 1.

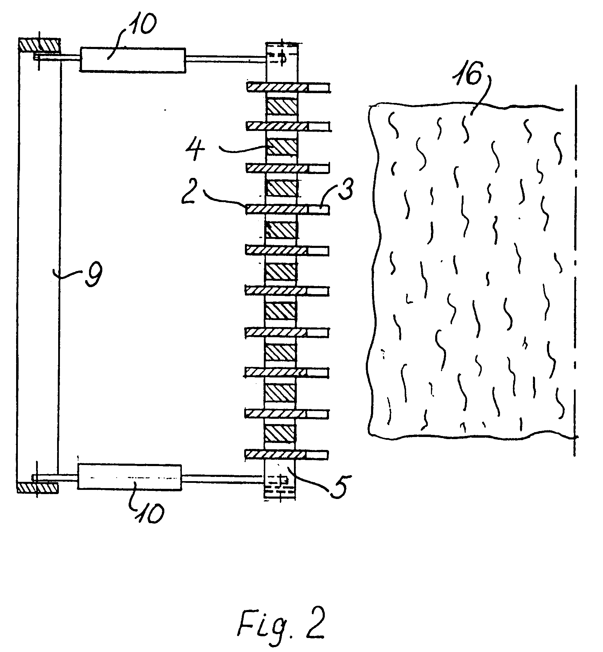

In the drawing a raking tool 1 is shown with several vertical raking rods 2, which are provided with jags or teeth 3 for the raking up of the bale of straw. Between the raking rods, shown best in Fig. 2, parallel rods 4 are placed, said rods being at the top and at the bottom welded to transverse rods 5 and 6 to form a grate 7. The grate 7 is at the bottom at 8 hinged to a stationary frame 9, and at the top the grate is carried by two pneumatic cylinders 10 connected to the frame 9. The raking rods 2 move up and down by means of a crank mechanism (not shown), which through a gear 11 is driven by an electric motor 12.

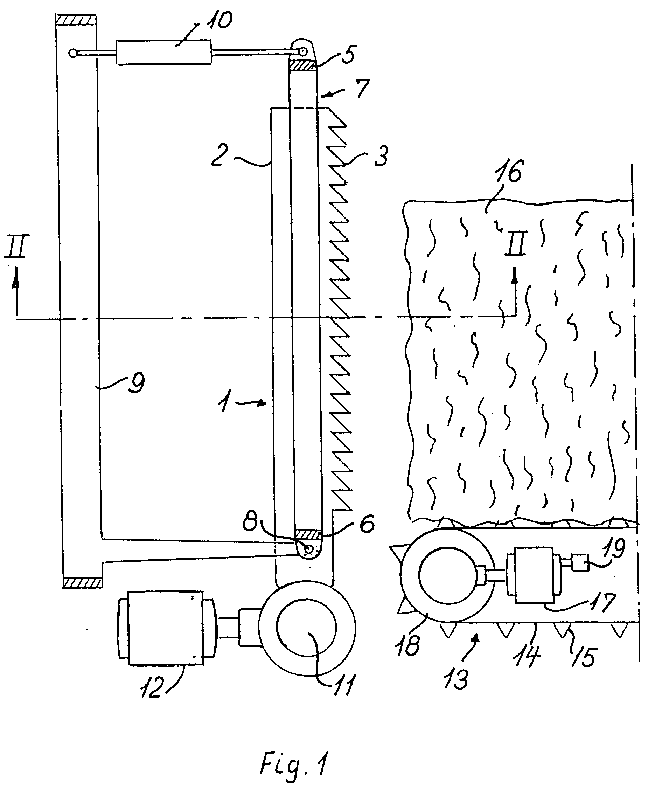

In the right side of Fig. 1 a raking table 13 is shown, said table being constructed as a conveyor belt 14 provided with grippers 15 for engaging a bale of straw 16, which on the conveyor belt 14 is conveyed towards the raking rods 2 and the grate 7.

The raking table is provided with an electric motor 17 driving the conveyor belt 14 through a gear 18. The electric motor 17 is of the type producing a torque, which is essentially constant over the range of revolutions from standstill to about 2/3 of the nominal number of revolutions. By using a motor of this type it is achieved that the bale of straw 16 is pressed against the raking tool with a force, which is essentially independent from the conveying speed of the raking table.

The electric motor 17 is provided with a detector 19 emitting a signal, which is dependent on the velocity of the motor and which permits the speed of the raking table to be detected.

The device shown operates in the following way. A bale of straw 16 is conveyed on the raking table 13 against the raking tool 1. When it is detected that the speed of the raking table goes below a predetermined value, the power supplied to the motor 17 is increased to a higher level with a view to pressing the bale of straw harder against the raking tool 1. If it is then detected that the electric motor 17 of the raking table is supplied with power at the higher level and that the raking motor simultaneously consumes a small amount of power, the top of the grate 7 is by means of the pneumatic cylinders 10 swung towards the left in Fig. 1, the penetration depth of the raking tool being momentarily increased, for instance for 15 seconds, whereafter the grate is returned to its starting position. In a plant for the raking up of so-called "Heston"-bales the movement of the grate may by way of example amount to 20 mm.

## Claims

1. A method of raking up bales of straw, in particular but not exclusively in a plant for raking up and firing bales of straw, by which method the bales of straw (16) are conveyed on a raking table (13) driven by a motor (17) against a raking tool (1) comprising several parallel, saw-toothed raking rods (2), which by a raking up motor (12) are driven in a reciprocating movement, and a grate (7) engaging the raking rods, said grate being movably suspended and moved by an actuator (10), thereby determining the penetration depth of the teeth (3) of the raking tools into the bale of straw (16), the motor (17) of the raking table being of the kind which produces a torque which is essentially constant over the range of revolutions from standstill to about 2/3 of the nominal number of revolutions, the power supplied to the motor (17) of the raking table increases from a lower level to a higher level, when it is detected that the speed of the raking table (13) goes below a predetermined value, and where the power again decreases to the lower level, when it is detected that the speed of the raking table is again exceeding said value, **characterized** in that the grate (7), when it is detected that the drive motor (17) of the raking table is supplied with a power at the higher level and the raking motor (12) simultaneously takes up a small effect, is moved from its starting position with a predetermined penetration depth to another position with a bigger penetration depth and returned to the starting position after the expiration of a predetermined period of time.

2. A method according to claim 1, **characterized** in that the predetermined period of time is selected within the range 1-60 s, preferably 15 s.

3. A method according to claim 1 or 2, **characterized** in that the power supplied to the drive motor (17) of the raking table is disconnected when the grate (7) takes up its other position and in that the drive motor of the raking table is again supplied with power at the expiration of another predetermined period of time after the return of the grate to its starting position.

4. A method according to claim 3, **characterized** in that the second period of time is selected within the range of 0-30 s, preferably 2 s.

5. A method according to claim 1-4, **characterized** in that an electric motor (13) is selected as drive motor for the raking table (13).

## Patentansprüche

1. Verfahren zum Aufreissen von Strohballen, insbesondere, aber nicht ausschliesslich in einer Anlage zum Aufreissen und Feuern von Strohballen, bei welchem Verfahren die Strohballen (16) auf einem von einem Motor (17) angetriebenen Aufreisstisch (13) zu einem Aufreisswerkzeug (1) hin befördert werden, welches Aufreisswerkzeug mehrere parallele, mit Sägezähnen versehene Reissstangen (2), die von ein Aufreissmotor (12) in hin- und hergehende Bewegung versetzt werden, umfasst, und einen zwischen die Reissstangen eingreifenden Rost (7), der beweglich angebracht ist und durch einen Aktuator (10) bewegt wird und somit die Eingreiftiefe der Zähne (3) des Aufreisswerkzeugs im Strohballen (16) bestimmt, wobei der Motor (17) des Aufreisstisches (13) von der Art ist, der einen Drehmoment erzeugt, der über dem Bereich der Umdrehungen vom Stillstand zu etwa 2/3 der nominellen Umdrehungszahl im wesentlichen konstant ist, und wo der zum Motor (17) des Aufreisstisches (13) zugeführte Effekt von einem niedrigeren Niveau auf ein höheres Niveau erhöht wird, wenn ermittelt wird, dass die Geschwindigkeit des Aufreisstisches (13) unter einen vorausbestimmten Wert fällt, und wo der Effekt wieder auf ein niedrigeres Niveau reduziert wird, wenn man ermittelt, dass die Geschwindigkeit des Aufreisstisches wiederum den erwähnten Wert übersteigt, dadurch **gekennzeichnet,** dass, wenn ermittelt wird, dass der Antriebsmotor (17) des Aufreisstisches mit einem Effekt des höheren Niveaus versehen wird und der Aufreissmotor (12) gleichzeitig einen kleineren Effekt aufnimmt, der Rost (7) von einer Ausgangsstellung mit einer vorausbestimmten Eindringtiefe in eine andere Stellung mit einer grösseren Eindringtiefe bewegt wird und nach Ablauf einer vorausbestimmten Zeitspanne in die Ausgangsstellung zurückkehrt.

2. Verfahren nach Anspruch 1, dadurch **gekennzeichnet,** dass der vorausbestimmte Zeitraum im Bereich von 1-60 s, vorzugsweise 15 s, gewählt wird.

3. Verfahren nach Anspruch 1 oder 2, dadurch **gekennzeichnet,** dass die Effektzufuhr zum Antriebsmotor (17) des Aufreisstisches (13) abgebrochen wird, wenn der Rost (7) seine andere Stellung einnimmt, und dass dem Antriebsmotor nach Ablauf eines anderen vorausbestimmten Zeitraumes nach Zurückkehren des Rostes in die Ausgangsstellung wiederum Effekt zugeführt wird.

4. Verfahren nach Anspruch 3, dadurch **gekennzeichnet,** dass die zweite Zeitspanne im Bereich von 0-30 s, vorzugsweise 2 s, gewählt wird.

5. Verfahren nach Anspruch 1-4, dadurch **gekennzeichnet,** dass als Antriebsmotor für den Aufreisstisch (13) ein Elektromotor (17) gewählt wird.

## Revendications

1. Procédé pour désagréger des balles de paille, en particulier mais non exclusivement dans une installation de déchiquetage et de combustion de balles de paille, méthode suivant laquelle les balles de paille (16) sont transportées sur une table de déchiquetage (13), commandée par un moteur (17), en appui contre un outil de déchiquetage (1) comportant plusieurs barres dentées parallèles de déchiquetage (12) effectuant un mouvement de va-et-vient, et une grille (7) en contact avec les barres de déchiquetage, ladite grille étant suspendue de façon mobile et commandées par un vérin (10) pour déterminer ainsi la profondeur de pénétration des dents (3) des outils de déchiquetage dans la balle de paille, le moteur (17) de la table de déchiquetage étant du type produisant un couple-moteur essentiellement constant dans la gamme de vitesse de rotation allant de la position immobile jusqu'à environ les 2/3 de la vitesse nominelle de rotation, la puissance fournie au moteur (17) de la table de déchiquetage passant d'un niveau bas à un niveau élevé lorsque l'on détecte que la vitesse de la table de déchiquetage (13) passe en dessous d'une valeur prédéterminée, la puissance passant de nouveau à un niveau bas lorsque l'on détecte que la vitesse de la table de déchiquetage dépasse de nouveau ladite valeur, **caractérisée** par le fait que lorsque l'on détecte que le moteur de commande (17) de la table de déchiquetage est alimenté avec une puissance au niveau élevé, et que simultanément le moteur de déchiquetage (12) ne prélève qu'une faible puissance, la grille (7) est déplacée depuis sa position de départ à profondeur prédéterminée de pénétration jusqu'à une autre position à profondeur de pénétration plus importante, et revient à la position de départ après expiration d'une période prédéterminée de temps.

2. Méthode selon la revendication 1, **caractérisée** par le fait que la période prédéterminée de temps est choisie dans la gamme de 1 à 60 secondes, de préférence 15 secondes.

3. Méthode selon les revendications 1 ou 2, **caractérisée** par le fait que la puissance fournie au moteur de commande (17) de la table de déchiquetage est déconnectée lorsque la grille (7) prend sa seconde position, et que le moteur de commande de la table de déchiquetage est de nouveau alimenté à l'expiration d'une seconde période prédéterminée de temps après retour de la grille à sa position de départ.

4. Méthode selon la revendication 3, **caractérisée** par le fait que la seconde période de temps est choisie dans la gamme de 0 à 30 secondes, de préférence 2 secondes.

5. Méthode selon les revendications 1 à 4, **caractérisée** par le fait que comme moteur pour la table de déchiquetage (13), on choisit un moteur électrique (17).
